# EUROPÄISCHE PATENTSCHRIFT

(11) **EP 2 580 019 B1**
(45) Veröffentlichungstag und Bekanntmachung des Hinweises auf die Patenterteilung: **05.04.2017**
(21) Anmeldenummer: 11731287.6
(22) Anmeldetag: 08.06.2011
(51) Int. Cl.: B23K 26/38, B23K 26/06, B23K 26/073, B23K 26/14

(54) **VERFAHREN UND VORRICHTUNG ZUR LASERMATERIALBEARBEITUNG EINES WERKSTÜCKS**
METHOD AND DEVICE FOR LASER PROCESSING
DISPOSITIF ET MÉTHODE DE TRAVAIL AU LASER

(30) Priorität: 08.06.2010 DE 102010029791
(43) Veröffentlichungstag der Anmeldung: 17.04.2013
(73) Patentinhaber: TRUMPF Werkzeugmaschinen GmbH & Co. KG, 71254 Ditzingen (DE)
(72) Erfinder: HESSE, Tim, 71254 Ditzingen (DE); KAISER, Tobias, 71229 Leonberg (DE); SPEKER, Nicolai, 74385 Pleidelsheim (DE); HÄCKER, Tobias, 71254 Ditzingen (DE)
(74) Vertreter: Kohler Schmid Möbus Patentanwälte
(86) Internationale Anmeldenummer: PCT/EP2011/059526
(87) Internationale Veröffentlichungsnummer: WO 2011/154461

(56) Entgegenhaltungen:
- WO-A1-2009/040103
- WO-A1-2010/016028
- WO-A2-93/16838
- WO-A2-2009/074140
- DE-A1-102007 024 701
- DE-A1-102008 053 397
- DATABASE INSPEC [Online] THE INSTITUTION OF ELECTRICAL ENGINEERS, STEVENAGE, GB 07 August 2000 NESTEROV A V ET AL: 'Laser beams with axially symmetric polarization and application to laser cutting and inertial fusion' Database accession no. 6687730 & JOURNAL OF PHYSICS D (APPLIED PHYSICS) IOP PUBLISHING UK Bd. 33, Nr. 15, Seiten 1817 - 1822 DOI: 10.1088/0022-3727/33/15/310 ISSN: 0022-3727
- A V Nesterov ET AL: "Laser beams with axially symmetric polarization", Journal of Physics D: Applied Physics, vol. 33, no. 15, 7 August 2000 (2000-08-07), pages 1817-1822, XP055232897, GB ISSN: 0022-3727, DOI: 10.1088/0022-3727/33/15/310

## Beschreibung

Die vorliegende Erfindung betrifft ein Verfahren zur Lasermaterialbearbeitung eines Werkstücks, insbesondere zum Laserschneiden oder Laserschweißen, wobei mittels eines Laserstrahls zumindest ein Teil des Werkstücks aufgeschmolzen und/oder verdampft wird und sich durch Hinzunahme einer Relativbewegung zwischen Laserstrahl und Werkstück eine Bestrahlfront ausbildet (siehe A V Nesterov ET AL: "Laser beams with axially symmetric polarization",Journal of Physics D: Applied Physics, Bd. 33, Nr. 15, 7. August 2000 (2000-08-07), Seiten 1817-1822).

In der Lasermaterialbearbeitung finden je nach Applikation und Anlagenverfügbarkeit unterschiedliche Laserstrahlquellen Verwendung. Beispielsweise wurden für Laserschneidarbeiten bevorzugt CO₂-Laser mit einer Laserwellenlänge von ca. 10 µm eingesetzt, wobei Festkörperlaser mit einer Laserwellenlänge im Bereich von 1 µm gerade beim Laserschmelzschneiden aufgrund hoher Vorschubsteigerungen und Energieeffizienz zunehmend an Bedeutung gewinnen.

Zur Erhöhung der Effizienz des eingesetzten Verfahrens wird häufig versucht, die Energieeinkopplung des Laserstrahls in das Werkstück zu maximieren. Beispielsweise wird in der WO 2010/016028 A1 hierzu vorgeschlagen, für das Laserschneiden azimutal polarisierte Strahlung zu verwenden. Durch die Anpassung der Polarisation erhöht sich die Absorption an der Bestrahlfront.

Im Vergleich zur Verwendung einer Laserwellenlänge von ca. 10 µm (CO₂-Laser weisen die Schneidergebnisse bei 1 µm jedoch eine verhältnismäßig hohe Schnittkantenrauhigkeit, Riefigkeit und Gratbildung auf. Mit zunehmender Blechdicke verstärken sich diese Effekte. Es ist zwischenzeitlich bekannt geworden, dass sich beim Laserschneiden, aber auch beim Laserschweißen, mit einer Wellenlänge im Bereich von 1 µm mit statistischer Polarisation eine besonders wellenförmige Bestrahlfront ausbildet. Hierdurch ergeben sich auf der Bestrahlfront unterschiedliche Einfallswinkel der Laserstrahlung. Da die Fresnel-Absorption der Laserstrahlung aber insbesondere auch winkelabhängig ist, resultieren die unterschiedlichen Einfallswinkel an lokalen Störungen an der Bestrahlfront wie Wellen in einem lokal ungünstigen Fresnel-Absorptionsverhalten, das Störungen eher begünstigt als dämpft. Dieser Effekt kann direkt mit der vergleichsweise schlechteren Schnittkantenqualität in Verbindung gebracht werden.

In der DE 10 2007 024 700 A1 wird vorgeschlagen, die Laserstrahlung derart zu beeinflussen, dass die Laserstrahlung mit vergleichsweise kleinen Einfallswinkeln, beispielsweise Einfallswinkeln kleiner 80° für die Lasermaterialbearbeitung von Stahl bei einer Wellenlänge von 1 µm, auf die Bestrahlfront auftrifft. Neben dem Erreichen des Maximums der Fresnel-Absorption führt die Wahl dieser Eigenschaften der Laserstrahlung auch zu einem geringeren Gradienten der Fresnel-Absorption, so dass hierdurch bedingte oder verstärkte Prozessinstabilitäten vermieden oder zumindest reduziert werden sollen. Entsprechend kleine Einfallswinkel werden dabei durch die Einbringung künstlicher Abbildungsfehler eingestellt, die die Divergenzwinkel des Laserstrahls gegenüber den durch Abbildungsfehler von Standardoptiken hervorgerufenen Divergenzwinkeln noch weiter vergrößern.

Durch diese Maßnahme wird die Absorptionscharakteristik letztlich über eine Verringerung der lokalen Einfallswinkel im fokussierten Laserstrahl an die Bestrahlfront angepasst. Dies hat zur Folge, dass die Absorption zu höheren Werten verschoben wird, woraus bekanntermaßen höhere Prozessgeschwindigkeiten resultieren. Nachteilig dabei ist jedoch, dass die bei der Erhöhung der Absorption durch Verringerung des lokalen Einfallswinkels ebenfalls vorgeschlagene reduzierte Winkelabhängigkeit der Absorption nicht die Bearbeitungsqualität erhöht.

Besonders nachteilig wirkt sich demnach die reduzierte Winkelabhängigkeit bei verringertem Einfallswinkel auf die Wellenerzeugung und deren Verstärkung auf der Bestrahlfront und damit auf die Schnittqualität aus. Zudem wird bei der Betrachtung der wellenförmigen Bestrahlfront durch den Stand der Technik die ebenfalls zu berücksichtigende Temperaturverteilung über die gesamte Bestrahlfront sowie die resultierenden azimutal um den Laserstrahl verlaufenden Schmelzströmungen völlig außer Acht gelassen.

Es ist daher Aufgabe der vorliegenden Erfindung, bei einem Verfahren der eingangs genannten Art die Wellenbildung auf der Bestrahlfront zu reduzieren sowie um den Laserstrahl verlaufende störende Schmelzströmungen, verursacht durch lokalen und/oder den insgesamt über den Bereich der die Bestrahlfront aufweisenden Materialdicke herrschenden Verdampfungsdruck der Schmelze, zu minimieren und so die Lasermaterialbearbeitungsqualität, insbesondere die Schnittkanten- und/oder Schweißnahtqualität, zu verbessern.

Die Erfindung betrifft ein Verfahren zum Laserschneiden eines Werkstücks, wobei mittels eines Laserstrahls zumindest ein Teil des Werkstücks aufgeschmolzen und/oder verdampft wird und sich durch Hinzunahme einer Relativbewegung zwischen Laserstrahl und Werkstück eine Schneidfront am Werkstück ausbildet, wobei der Laserstrahl durch mindestens zwei radial polarisierte Teilstrahlen gebildet ist, welche zueinander in Vorschubrichtung des Laserstrahls versetzt sind. Die beiden in Vorschubrichtung versetzten radial polarisierten Teilstrahlen sorgen dafür, dass die zugehörigen E-Vektoren auch im unteren Blechbereich parallel zur Einfallsebene auftreffen und damit bestmöglich absorbiert werden. Dadurch kann die Wirktiefe der radialen Polarisation deutlich vergrößert werden, was zu einem konstant breiteren und damit parallelen Schnittspalt führt.Die zwei radial polarisierten Teilstrahlen können durch zwei separate Laserstrahlen oder durch einen strahlgeformten Laserstrahl mit zwei in Vorschubrichtung des Laserstrahls zueinander versetzten Intensitätsmaxima gebildet sein. Die Erfindung betrifft auch ein Verfahren zum Laserschneiden eines Werkstücks, wobei mittels eines Laserstrahls zumindest ein Teil des Werkstücks aufgeschmolzen und/oder verdampft wird und sich durch Hinzunahme einer Relativbewegung zwischen Laserstrahl und Werkstück eine Schneidfront am Werkstück ausbildet, wobei der Laserstrahl durch mehrere sich in Vorschubrichtung des Laserstrahls erstreckende Strahlstreifen mit jeweils unterschiedlicher linearer Polarisationsrichtung gebildet ist und wobei ausgehend von der in Vorschubrichtung verlaufenden Laserstrahllängsmittelebene die zwischen den linearen Polarisationsrichtungen und der Laserstrahllängsmittelebene jeweils gebildeten Winkel zu den äußeren Strahlstreifen hin zunehmen. Besonders bevorzugt verläuft die lineare Polarisationsrichtung der Strahlstreifen jeweils parallel zu einer Normalen der jeweiligen Schneidfrontvorderkontur. Aufgrund der linear polarisierten Strahlstreifen trifft die Laserstrahlung an der gesamten Schneidfront und in jeder Werkstückebene P-polarisiert auf, was für alle Einfallswinkel eine maximale Fresnel-Absorption zur Folge hat. Da sich bei der Streifenpolarisation die Wirktiefe über die gesamte Werkstückdicke erstreckt, kommt es zu keinem Kanteneinlauf mehr, und die Laserleistung kann optimal in Vorschub umgesetzt werden. Durch die senkrechten Schnittkanten wird die Schnittqualität verbessert. Außerdem wird durch die reduzierte reflektierte Leistung die Gratbildung und Oberflächenrauheit verringert. Durch die erfindungsgemäße, im Wesentlichen angepasste absorbierte Intensität und/oder Temperaturverteilung wird, wie Versuche gezeigt haben, die Ausbildung der wellenförmigen Bestrahlfront, also die Oberflächenstruktur der Bestrahlfront, beim Laserschneidverfahren gedämpft bzw. in ihrer Oberflächenausprägung reduziert, und die Schmelze an der Bestrahlfront zeigt vergleichsweise konstante Verhältnisse über die die Bestrahlfront aufweisende Materialdicke. Es wurde erfindungsgemäß erkannt, dass dazu der Gradient der absorbierten Intensität im Bereich des Einfallswinkels um 90° angepasst werden oder zumindest auf ähnliche Verhältnisse wie bei zirkular polarisierter Laserstrahlung bei 10µm-Wellenlänge eingestellt werden muss. Die dadurch erzielten stabilen Prozessbedingungen vermindern im Falle von Laserschneidverfahren die Schnittkantenrauhigkeit, die Riefigkeit und Gratbildung, wobei in diesem Fall vorzugsweise der Gradient der absorbierten Intensität im Bereich des Einfallswinkels um 90° maximiert wird.

Im Falle von Laserschweißverfahren wird durch die Ausbildung der wellenförmigen Bestrahlfront, also durch die Oberflächenstruktur der Bestrahlfront, die absorbierte Intensität bevorzugt derart angepasst, dass die Bildung von Spritzern, die in Form von Anhaftungen auf der Blechober- und/oder -unterseite die Nahtqualität nachteilig beeinflussen, vornehmlich reduziert oder gar vermieden wird. Hierzu wird der Gradient der absorbierten Intensität im Bereich des Einfallswinkels um 90° vorzugsweise minimiert.

Die Erfindung ist dabei nicht auf einen Bereich des Einfallswinkels auf die Bestrahlfront um 90° beschränkt, sondern erstreckt sich vielmehr auf einen Einfallswinkelbereich, der eine entsprechend angepasste Gradientencharakteristik der absorbierten Intensität aufweist. Im Bereich des Laserschneidens mittels 1 µm-Strahlung ist dies vornehmlich der Bereich des Einfallswinkels größer 80°, insbesondere größer 84°. Die Einstellung einer im Wesentlichen, im Falle des Laserschneidens vorzugsweise maximierten und im Falle des Laserschweißen vorzugsweise minimierten Gradienten der absorbierten Intensität bei Einfallswinkeln im Bereich um 90°, erfolgt über eine gezielte Einstellung der Polarisation, insbesondere über die Einstellung azimutaler und/oder radialer Polarisation. Idealerweise sollte die Laserstrahlung zum Laserschneiden daher einen möglichst hohen Anteil radialer Polarisation aufweisen, der zumindest über den Anteil radialer Polarisation bei statistischer Polarisation hinausgeht, insbesondere ist eine rein radiale oder nahezu rein radiale Polarisation besonders bevorzugt.

Durch die gezielte Einstellung der Polarisation kann die absorbierte Intensität im Arbeitsbereich bei einem Einstrahlwinkel im Bereich von 90°, aber auch bei abweichenden Einstrahlwinkeln, beispielsweise bei stechend oder schleppend arbeitenden Verfahren, die üblicherweise von 90° ausgehend in einem Bereich bis etwa 60° bzw. 120° arbeiten, vergleichsweise prozessstabilisierend auf einem relativ hohen Niveau (hohes Niveau: 1 µm vs. 10 µm) gehalten werden. Erfindungsgemäß ist erkannt worden, dass die Wellen der Schmelze auf der Bestrahlfront bei einer Laserstrahlung mit einer Wellenlänge im Bereich von 10 µm, bei der die Strahlung zirkular polarisiert auf das Werkstück trifft, gedämpft werden, da die Strahlung bevorzugt bei großen Einfallswinkeln (d.h. nahe 90° Einfallswinkel) mit hohem Gradient absorbiert wird. Bei Einsatz einer Laserstrahlung mit einer Wellenlänge im Bereich von 1 µm mit einer (heute verwendeten) statistischen Polarisation wird die Strahlung aufgrund des geringen Gradienten bevorzugt auf der dem Laserstrahl zugewandten Wellenseite und somit unter kleineren Einfallswinkeln absorbiert. Hierdurch werden die Wellen verstärkt, wobei der entstehende Dampfimpuls die Wellen zusätzlich in Strahlausbreitungsrichtung und azimutal um den Laserstrahl drückt. Der daraus resultierende lokal stark variierende Schmelzaustrieb führt zu der bereits beschriebenen Riefigkeit und Gratbildung bzw. Spritzerbildung. Zur Reduzierung oder aber auch Vermeidung dieses Effekts wird erfindungsgemäß die Polarisation derart eingestellt, dass die Fresnel-Absorptions-Charakteristik bzw. vorzugsweise die absorbierte Intensität (entspricht der Fresnel-Absorption * cos(Einfallswinkel)) der 1 µm-Strahlung der Charakteristik der 10 µm-Strahlung angepasst wird, um einen vergleichbaren Dämpfungseffekt zu erzielen.

Die Einstellung der gewünschten Polarisation erfolgt in diesem Zusammenhang bevorzugt über die Umwandlung der statistischen Polarisation in radiale Polarisation des Laserstrahls im Bearbeitungskopf einer entsprechenden Lasermaterialbearbeitungseinrichtung. In einer besonders bevorzugten alternativen Ausführungsform wird die radiale Polarisation ohne signifikanten Leistungsverlust (wie bei der Umwandlung im Bearbeitungskopf) im Resonator erzeugt und über polarisationserhaltende Strahlführungen, wie bspw. über spiegelbasierte Strahlführungen oder hierfür ausgelegte optische Transportfasern, zum Bearbeitungskopf bzw. zur Bearbeitungsstelle geführt.

Ferner wurde erfindungsgemäß erkannt, dass die Abhängigkeit der absorbierten Intensität vom Einfallswinkel durch eine Anpassung des Brechungsindizes des Schneidgases in gewünschter Weise beeinflusst werden kann. Über die Wahl des Schneidgases und/oder einer Schneidgasmischung ist es dadurch möglich alternativ oder zusätzlich zur Polarisation die gewünschte prozessstabilisierende Absorptionscharakteristik bei Einfallswinkeln nahe 90° einzustellen.

Ferner wird durch die erfindungsgemäß räumlich angepasste Intensitätsverteilung zusätzlich eine durch lokal oder global zu hohe Prozesstemperaturen hervorgerufene lokale Verdampfung unterbunden, die zu einer wie bei der verstärkten Wellenbewegung hervorgerufenen, unerwünschten azimutal um den Laserstrahl verlaufenden Schmelzströmung führen kann.

Daher kann ergänzend zur gezielten Einstellung der Polarisation eine Reduzierung oder weitere Reduzierung der Wellenbildung und/oder Vermeidung ungewollter Verdampfung mit Folge einer negativen azimutalen Schmelzströmung um den Laserstrahl über die Verwendung eines angepassten Strahlprofils erzielt werden. Durch ein räumliches Strahlprofil mit Intensitätsmaxima im Bereich des äußeren Strahlradius und mit abnehmender Intensität in Richtung Strahlachse, insbesondere durch Verwendung eines Ring-Modes, wird der Temperatureintrag über die Bestrahlfront derart reguliert, dass sich über die die Bestrahlfront aufweisende Materialdicke in Strahlausbreitungsrichtung möglichst nahezu konstante Eigenschaften der Schmelze einstellen. Somit wird eine ansonsten in Strahlausbreitungsrichtung zunehmende Temperatur- und daraus folgende Dampfentwicklung mit Dampfdruckimpuls auf die Schmelze, der die Wellenbildung bzw. ungewollte Schmelzströmungen ausbilden oder weiter verstärken und zu einem zu vermeidenden azimutal zur Laserstrahlachse verlaufenden Schmelzfluss führen würde, vermindert.

In einer bevorzugten Ausführungsform wird die (negative) Steigung der Flanken von Intensitätsmaxima zu -minima gemäß der Materialdicke bzw. der zu bearbeitenden Materialtiefe (und dem zu bearbeitenden Material selbst) angepasst.

Vorzugsweise weist der Laserstrahl eine Wellenlänge im Bereich von ca. 500 nm bis ca. 5 µm, insbesondere im Bereich von ca. 1 µm, auf und wird mittels eines Festkörperlasers, wie z.B. eines Stab-, Scheiben-, Faser- oder Diodenlasers, erzeugt. Hinsichtlich der Verwendung mehrerer Teilstrahlen oder aber auch Strahlstreifen erweitert sich der bevorzugte Wellenlängenbereich auch auf Strahlung bis zu ca. 10 µm (10,6 µm), wie diese durch einen CO₂-Laser bereitgestellt wird.

Die Erfindung betrifft schließlich auch eine Vorrichtung zum Laserschneiden eines Werkstücks mittels zweier radial polarisierter Teilstrahlen und/oder eines streifenpolarisierten Laserstrahls.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: die wellenförmigen Bestrahlfronten eines Werkstücks beim herkömmlichen Laserschneiden mit einer Laserwellenlänge von 10,6µm (Fig. 1 a) und von 1 µm (Fig. 1 b), jeweils über die Materialdicke des Werkstücks;
- Fig. 2: den Zusammenhang zwischen polarisationsabhängiger absorbierter Intensität (Fresnel-Absorption * cos(Einfallswinkelα)) und Einfallswinkel α bei Laserwellenlängen von 10,6µm (zirkular polarisiert und 1µm (statistisch polarisiert, P-polarisiert und Spolarisiert);
- Fign. 3a, 3b: den Laserstrahl mit einer bezogen auf die Bestrahlfront radialen Polarisation (Fig. 3a) und mit einer bezogen auf die Bestrahlfront azimutalen Polarisation (Fig. 3b);
- Fig. 4: das Strahlprofil des Laserstrahls für eine homogene Temperaturverteilung im Verhältnis zur Bestrahlfront;
- Fig. 5: die Schneidfront eines Werkstücks beim Laserschneiden mit einem radial polarisierten Laserstrahl in einem Längsquerschnitt;
- Fign. 6a-6c: die Schneidfront des Werkstücks in drei unterschiedlichen Werkstückebenen entsprechend A-C in Fig. 5;
- Fign. 7a-7c: die Schneidfront eines Werkstücks beim Laserschneiden mit zwei radial polarisierten Teilstrahlen, die parallel zueinander verlaufen (Fig. 7a), zueinender verkippt sind (Fig. 7b) oder durch einen strahlgeformten Laserstrahl (Fig. 7c) gebildet sind;
- Fign. 8a-8c: die Schneidfront des Werkstücks in drei unterschiedlichen Werkstückebenen entsprechend A-C in Fig. 7;
- Fig. 9: schematisch eine Laserschneidvorrichtung zum Erzeugen zweier radial polarisierter Teilstrahlen;
- Fign. 10a-10c: die Schneidfront des Werkstücks beim Laserschneiden mit einem streifenpolarisierten Laserstrahl in drei unterschiedlichen Werkstückebenen entsprechend A-C in Fig. 7;
- Fig. 11: schematisch eine Laserschneidvorrichtung zum Erzeugen eines streifenpolarisierten Laserstrahls; und
- Fig. 12: schematisch einen um die Laserstrahlachse drehbaren Streifenpolarisator und einen vorgeordneten, um die Laserstrahlachse drehbaren Polarisationskonverter.

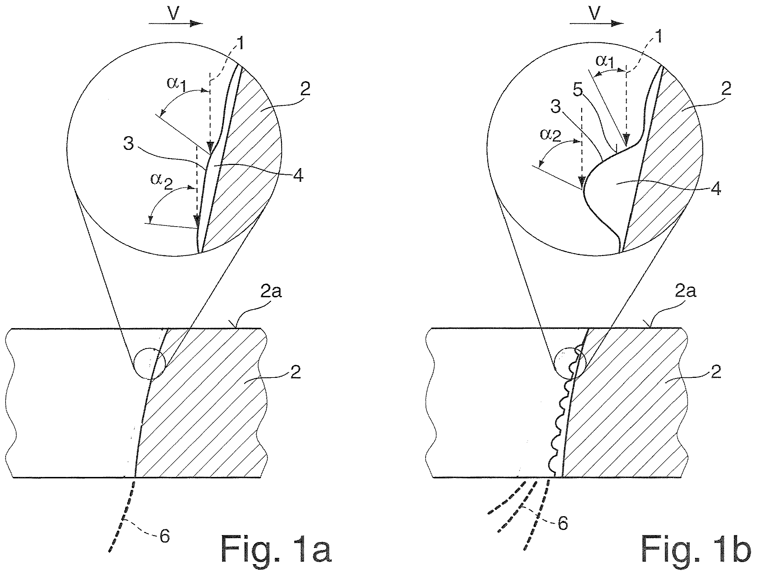

Wie in **Fign. 1a, 1b** gezeigt, wird beim Laserschneiden mittels eines Laserstrahls **1** ein Teil des Werkstücks **2** im Arbeitspunkt aufgeschmolzen und/oder verdampft, wobei sich dann durch eine Relativbewegung (Schneidrichtung v) zwischen Laserstrahl 1 und Werkstück 2 eine Bestrahlfront über die Materialdicke des Werkstücks 2 ausbildet. Diese Bestrahlfront ist mit **3** bezeichnet und liegt auf der Schmelze **4.** Der Laserstrahl 1 wird auf die ihm zugewandte Werkstückoberfläche **2a** in einem Einstrahlwinkel im Bereich von etwa 70° bis 110°, insbesondere nahezu senkrecht, ausgerichtet.

Fig. 1 a zeigt einen herkömmlichen Laserschneidprozess unter Verwendung eines zirkular polarisierten Laserstrahls 1 mit einer Wellenlänge von 10,6 µm, und Fig. 1b zeigt einen herkömmlichen Laserschneidprozess unter Verwendung eines statistisch polarisierten Laserstrahls 1 mit einer Wellenlänge von ca. 1 µm. Die Schmelze 4 mit der Bestrahlfront 3 bildet eine wellenförmige Oberflächenstruktur aus, die beim Laserschneiden bei 1 µm deutlich ausgeprägter als bei 10,6 µm ist. Wie in Fig. 1 a gezeigt, trifft der Laserstrahl 1 lokal mit etwa gleichen Einfallswinkeln α₁, α₂ (α₁ ≈ α₂) auf die wellenförmige Schmelze 4 auf. Wie in Fig. 1b gezeigt, trifft hier der Laserstrahl 1 lokal mit unterschiedlichen Einfallswinkeln α₁, α₂ (α₁ < α₂) auf die wellenförmige Schmelze **4** auf, so dass sich im Falle eines geringen Einfallswinkels α₁ auf den dem Laserstrahl 1 zugewandten Wellenanteilen der Schmelze 4, also auf der dem Laserstrahl 1 zugewandten Wellenseite **5,** eine hohe absorbierte Intensität einstellt. Die annähernd in Richtung des Laserstrahls 1 verlaufenden Wellenanteile der Schmelze 4 resultieren in größeren Einfallswinkeln α₂, die mit einer geringeren absorbierten Intensität verbunden sind. Dies führt dazu, dass die Wellen der Schmelze 4 noch verstärkt und durch den Dampfimpuls die Wellen zusätzlich nach unten und azimutal um den Laserstrahl 1 gedrückt werden. Durch diesen Effekt entsteht ein zeitlich und örtlich unregelmäßiger Schmelzaustrieb **6** vor und hinter dem Laserstrahl 1, der in Konsequenz in einer hohen Riefigkeit und Gratbildung am geschnittenen Werkstück 2, insbesondere mit zunehmender Materialdicke, resultiert.

Die im Gegensatz hierzu relativ steilen Gradienten der absorbierten Intensität bei Einfallswinkeln im Bereich um 90° bei der 10,6 µm- Laserstrahlung mit entsprechend flacher Wellenstruktur der Schmelze 4 an der Bestrahlfront 3 verursachen, wie in Fig. 1 a gezeigt, einen wesentlich regelmäßigeren Schmelzaustrieb 6.

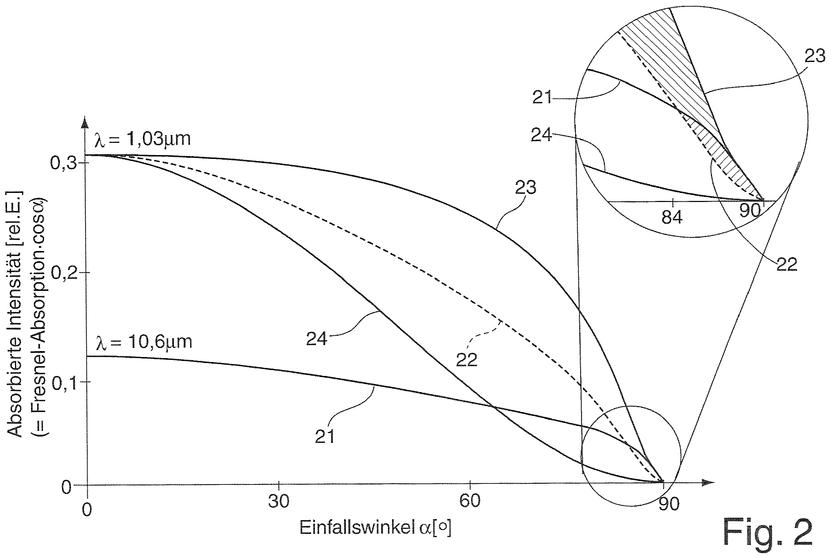

Dieser Effekt wird in **Fig. 2** anhand der dargestellten absorbierten Intensität für den Laserstahl 1, d.h. durch den Zusammenhang zwischen polarisationsabhängiger Absorption und Einfallswinkel α bei unterschiedlichen Wellenlängen, nochmals deutlich. 10,6µm-Laserstrahlung mit zirkularer Polarisation **21** dämpft Wellen der Schmelze 4, da die Laserstrahlung bereits bei großen Einfallswinkeln α in hohem Maße absorbiert wird. 1µm-Laserstrahlung mit der herkömmlich verwendeten statistischen Polarisation **22** wird bevorzugt auf der dem Laserstrahl 1 zugewandten Wellenseite 5 der Schmelze 4 absorbiert. Im Ergebnis werden bei der 1µm-Laserstrahlung die Wellen der Schmelze 4 verstärkt und durch den Dampfimpuls diese Wellen zusätzlich nach unten und azimutal um den Laserstrahl 1 gedrückt. Um die Verstärkung der Wellenbildung bei der 1µm-Laserstrahlung zu unterbinden und einen vergleichbaren Dämpfungseffekt wie bei der 10,6µm-Laserstrahlung zu erzielen, wird der Gradient der absorbierten Intensität im Bereich des Einfallswinkels von 90° für das Laserschneiden mit 1µm-Lasern möglichst ähnlich zu der bekannten Charakteristik bei 10µm eingestellt oder vorzugsweise maximiert.

Nach Fig. 2 wird dies dadurch erreicht, dass bei der 1µm-Laserstrahlung in Schneidrichtung v die reine P-Polarisation (radiale Polarisation) **23** oder eine definierte Mischung aus P-Polarisation 23 und S-Polarisation (azimutale Polarisation) **24** davon zur Einstellung der erforderlichen Einkoppelcharakteristik verwendet werden. Der Laserstrahl 1 wird mittels einer geeigneten Polarisationsvorrichtung, z.B. einer segmentierten polarisierenden Planoptik im Bearbeitungskopf, mit der gewünschten Polarisation versehen.

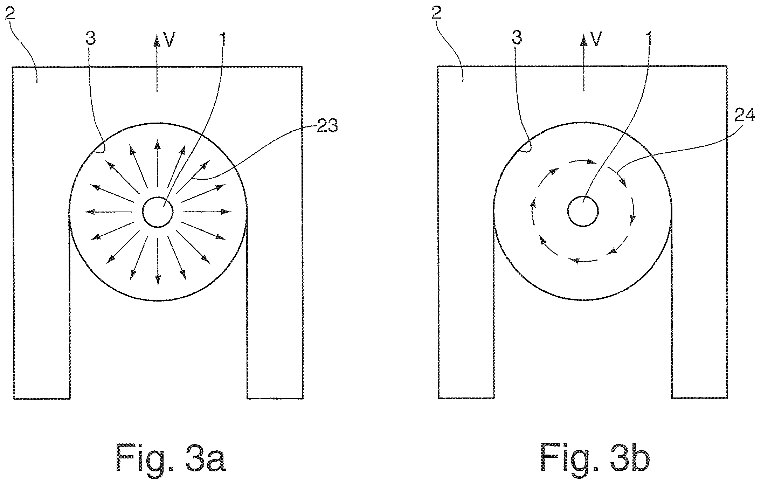

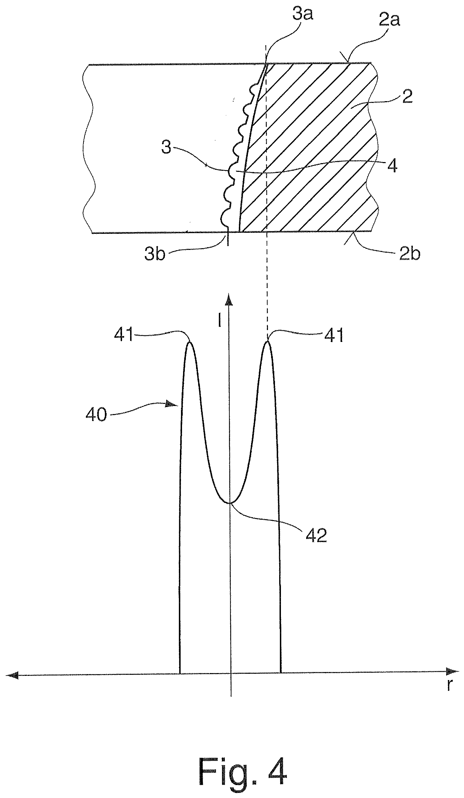

**Fig. 3a** zeigt den Laserstrahl 1 mit einer bezogen auf die Bestrahlfront 3 radialen Polarisation, d.h. mit P-Polarisation 23, und **Fig. 3b** zeigt den Laserstrahl 1 mit einer bezogen auf die Bestrahlfront 3 azimutalen Polarisation, d.h. mit S-Polarisation 24. Um die wellenförmige Oberflächenstruktur der Bestrahlfront 3 nicht nur lokal, sondern auch über die die Bestrahlfront 3 aufweisende Materialdicke des Werkstücks 2 zu reduzieren, wird alternativ oder zusätzlich zur Polarisationseinstellung der erforderlichen Einkoppelcharakteristik ein Laserstrahl 1 mit dem in **Fig. 4** gezeigten räumlichen Strahlprofil **40** eingesetzt, das ein Intensitätsmaximum **41** im Auftreffpunkt (Bestrahlfrontkante) **3a** an der dem einfallenden Laserstrahl 1 zugewandten Werkstückoberfläche 2a und abfallende Intensität entlang der Bestrahlfront 3 aufweist. Die Intensität fällt bis zu ihrem Minimum **42** zumindest bis zum Erreichen der Werkstückunterseite **2b** im Punkt (Bestrahlfrontkante) **3b** ab, wobei der Strahlradius r zumindest die Bestrahlfront 3 erfasst. Die (negative) Steigung der Flanken von Intensitätsmaximum zu -minimum wird vorzugsweise gemäß der Materialdicke bzw. der zu bearbeitenden Materialtiefe (und dem zu bearbeitenden Material selbst) angepasst. Die gewünschte Intensitätsverteilung lässt sich wahlweise bereits in der Strahlerzeugung einstellen und über spiegelbasierte Strahlführungen oder Faseroptiken zum Bearbeitungsort übertragen. Alternativ kann eine typische Intensitätsverteilung mit Gaussförmiger oder Flat-Top-Intensitätsverteilung über diffraktive, reflektive oder refraktive Optiken oder Transportfasern in Form von Hohlkernfasern oder Multiclad-Fasern generiert werden.

Alternativ oder zusätzlich zu den genannten Maßnahmen kann die gewünschte Absorptionscharakteristik, insbesondere der Gradient der absorbierten Intensität bei Einfallswinkeln α nahe 90°, auch über die optischen Eigenschaften eines Schneidgases oder einer Schneidgasmischung angepasst werden.

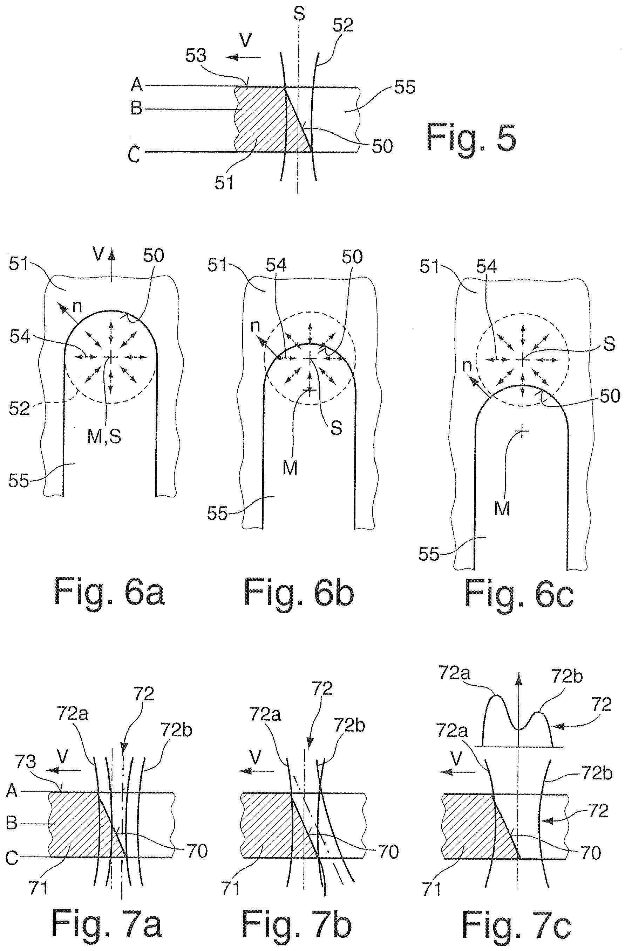

**Fig. 5** zeigt die schräge Schneidfront **50** eines Werkstücks **51** beim Laserschneiden mit einem radial polarisierten Laserstrahl **52,** der senkrecht auf das Werkstück 51 trifft und in Vorschubrichtung **v** über das Werkstück 51 bewegt wird. Wie in **Fign. 6a-****6c** gezeigt, weist die Schneidfront 50 dabei aufgrund des kreisrunden Laserstrahls 52 in jeder zur Laserstrahlachse **S** rechtwinkligen Schnittebene näherungsweise dieselbe halbkreisförmige Schneidfrontkontur auf, wobei die einzelnen Schneidfrontkonturen aufgrund des Schneidfrontnachlaufs in Vorschubsrichtung v zueinander versetzt sind. Der Kreismittelpunkt **M** der halbkreisförmigen Schneidfrontkontur fällt auf der Werkstückoberseite **53** (Werkstückebene A) mit der Laserstrahlachse S zusammen, und je tiefer der Laserstrahl 52 in das Werkstück 51 eintritt (Werkstückebenen B, C), umso weiter entfernen sich aufgrund des Schneidfrontnachlaufs die Kreismittelpunkte M der halbkreisförmigen Schneidfrontkonturen von der Laserstrahlachse S.

Wie in Fig. 6a gezeigt, schwingen an der Werkstückoberseite 53 die E-Vektoren **54** der radialen Polarisation stets parallel zur Einfallsebene, die vom jeweiligen Normalenvektor **n** der halbkreisförmigen Schneidfrontkontur und der Strahlachse S aufgespannt wird. Somit wirkt die radiale Polarisation an der Werkstückoberseite 53 vollständig als P-Polarisation, was für alle Einfallswinkel eine maximale Fresnel-Absorption zur Folge hat. Je weiter die Kreismittelpunkte M der halbkreisförmigen Schneidfrontkonturen und die Strahlachse S voneinander beabstandet sind (Fign. 6b, 6c), umso mehr wirkt die radiale Polarisation im Mittel mit einem immer größer werdenden Anteil als S-Polarisation. Diese wird bei den beim Laserschneiden auftretenden Einfallswinkeln sehr viel schlechter absorbiert als P-Polarisation. Da die radiale Polarisation nur an der Werkstückoberseite 53 P-polarisiert wirkt, entsteht aufgrund dort erhöhter Absorption ein Schnittspalt **55** mit konischem Kanteneinlauf, welcher beim Laserschneiden unerwünscht ist. Zusätzlich kann nicht das gesamte Leistungspotential in Vorschub umgesetzt werden.

**Fign. 7a-7c** zeigen die schräge Schneidfront **70** eines Werkstücks **71** beim Laserschneiden gemäß einer ersten Ausführungsform der Erfindung mit einem aus zwei radial polarisierten Teilstrahlen **72a, 72b,** gebildeten Laserstrahl **72** (z.B. 1µm-Laserstrahlung), der in Vorschubrichtung v über das Werkstück 51 bewegt wird. Die beiden Teilstrahlen 72a, 72b sind zueinander in Vorschubrichtung v versetzt, wobei der in Vorschubrichtung v voreilende Teilstrahl 72a senkrecht auf die Werkstückoberseite 73 auftrifft und vorzugsweise eine höhere Leistungsdichte als der nacheilende Teilstrahl 72b aufweist. In Fig. 7a verläuft der nacheilende Teilstrahl 72b parallel zum voreilenden Teilstrahl 72a und trifft somit ebenfalls senkrecht auf die Werkstückoberseite 73 auf. In Fig. 7b verläuft der nacheilende Teilstrahl 72b verkippt zum voreilenden Teilstrahl 72a und zwar vorzugsweise parallel oder zumindest nahezu parallel zur schrägen Schneidfront 70. In Fig. 7c sind die beiden Teilstrahlen 72a, 72b durch einen einzigen Laserstrahl 72 mit zwei in Vorschubrichtung v zueinander versetzten Intensitätsmaxima gebildet.

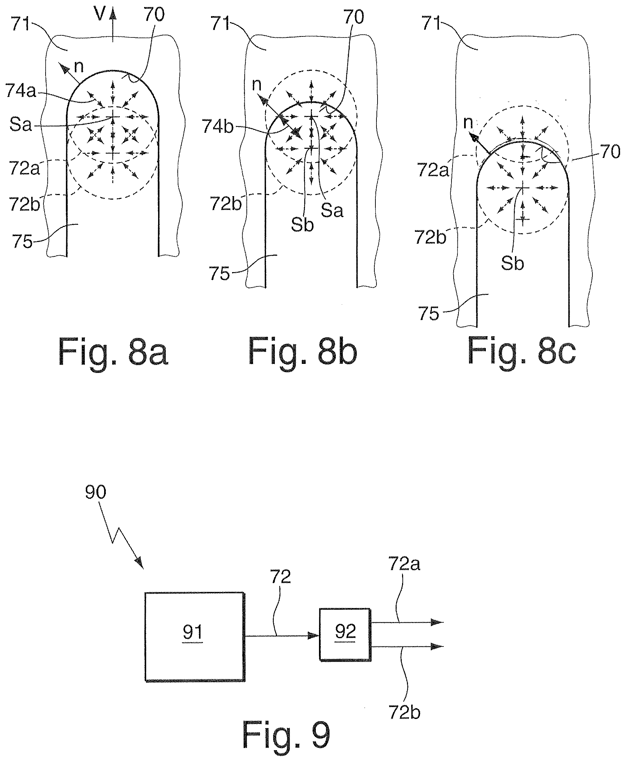

Wie in **Fig. 8a** gezeigt, schwingen an der Werkstückoberseite 73 (Werkstückebene A) die E-Vektoren **74a** der radialen Polarisation des vorlaufenden Teilsstrahls 72a stets parallel zur Einfallsebene, die vom jeweiligen Normalenvektor n der halbkreisförmigen Schneidfrontkontur und der Strahlachse **Sa** des vorlaufenden Teilsstrahls 72a aufgespannt wird, und werden somit bestmöglich absorbiert.
Wie in **Fig. 8b** gezeigt, schwingen im mittleren Werkstückbereich (Werkstückebene B) die E-Vektoren **74b** der radialen Polarisation des nachlaufenden Teilsstrahls 72b stets parallel zur Einfallsebene, die vom jeweiligen Normalenvektor n der halbkreisförmigen Schneidfrontkontur und der Strahlachse **Sb** des nachlaufenden Teilsstrahls 72b aufgespannt wird, und werden somit bestmöglich absorbiert.
Der nachlaufende Teilstrahl 72b führt auch zu einer im Vergleich zu Fig. 6c besseren Absorption an der Werkstückunterseite (Werkstückebene C).
Die beiden in Vorschubrichtung v zueinander versetzten radial polarisierten Teilstrahlen 72a, 72b sorgen also dafür, dass die zugehörigen E-Vektoren 74a, 74b auch im mittleren und unteren Blechbereich parallel zur Einfallsebene auftreffen und damit bestmöglich absorbiert werden. Dadurch kann die Wirktiefe der radialen Polarisation deutlich vergrößert werden, was in einem konstanteren Energieeintrag und damit parallelen Schnittspalt **75,** also in einer reduzierten Schnittkantenschräge, resultiert. Gleichzeitig führen die verbesserte Gaseinkopplung durch den zumindest im mittleren und unteren Blechbereich breiteren Schnittspalt und die erhöhte Absorption zu einer Steigerung der Vorschubgeschwindigkeit.

In Fig. 7b wirkt die radiale Polarisation des gekippten nacheilenden Teilstrahls 72b über die gesamte Schneidfront 70 annähernd als P-Polarisation. Der nacheilende Teilstrahl 72b trifft vorteilhaft unter dem Brewsterwinkel auf die schräge Schneidfront 70 auf, wodurch im unteren Werkstückbereich maximale Absorption erreicht und der Schnittspalt 75 aufgeweitet wird.

Die in Fign. 7a, 7b gezeigten zwei radial polarisierten Teilstrahlen 72a, 72b können aus einem einzigen radial polarisierten Laserstrahl erzeugt werden, beispielsweise mittels eines Strahlteilers, wie z.B. einer teilweise in den Laserstrahl hineinragenden Keilplatte.

Das in Fig. 7c gezeigte Strahlprofil mit zwei Intensitätsmaxima kann aus einem bereits radial polarisierten Laserstrahl mittels einer abbildenden Optik (z. B. diffraktive Optik) erzeugt bzw. geformt werden. Alternativ kann das strahlformende optische Element die radiale Polarisation selbst erzeugen.

**Fig. 9** zeigt schematisch eine zugehörige Laserschneidvorrichtung **90** mit einem Lasergenerator **91** zum Erzeugen eines insbesondere bereits radial polarisierten Laserstrahls 72 und mit einer Einrichtung **92** zum Erzeugen der beiden radial polarisierten Teilstrahlen 72a, 72b aus dem Laserstrahls 72. Wie oben beschrieben kann die Einrichtung 91 beispielsweise ein Strahlteiler oder eine strahlformende Optik sein.

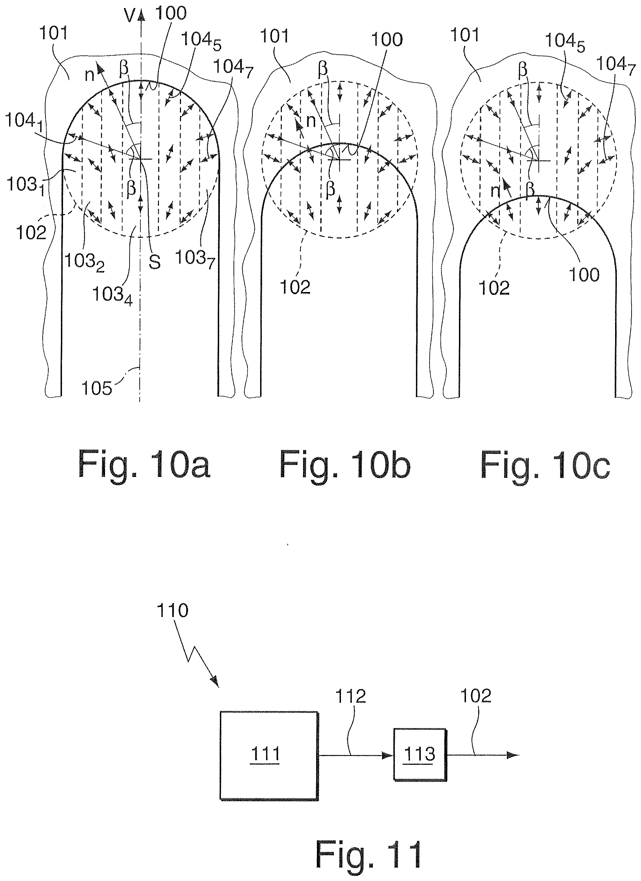

**Fign. 10a-10c** zeigen die halbkreisförmige Schneidfront **100** des Werkstücks **101** beim Laserschneiden gemäß einer zweiten Ausführungsform der Erfindung mit einem streifenpolarisierten kreisrunden Laserstrahl **102** (z.B. 1 µm-Laserstrahlung) in drei unterschiedlichen Werkstückebenen entsprechend A-C in Fig. 7. Statt dem gezeigten kreisrunden Laserstrahl 102 sind beliebige weitere Strahlquerschnitte denkbar, wobei die Strahlstreifen durch Verwendung eines entsprechend angepassten Streifenpolarisator gebildet werden. Der Laserstrahl 102 ist durch mehrere (hier lediglich beispielhaft sieben) sich in Vorschubrichtung v des Laserstrahls erstreckende Strahlstreifen **103₁-103₇** mit jeweils unterschiedlicher linearer Polarisationsrichtung (Polarisationsvektor) **104₁-104₇** gebildet. Ausgehend von der in Vorschubrichtung v verlaufenden Laserstrahllängsmittelebene (Streifenmittelebene) **105** nehmen die zwischen den linearen Polarisationsrichtungen 104₁-104₇ und der Laserstrahllängsmittelebene 105 jeweils gebildeten Winkel **ß** vom mittleren Strahlstreifen 103₄ zu den beiden äußeren Strahlstreifen 103₁, 103₇ hin zu. Die lineare Polarisationsrichtung 104₁-104₇ in den Strahlstreifen 103₁-103₇ ist jeweils so gewählt, dass sie parallel zu einer Normalen der Schneidfrontvorderkontur des jeweils zugeordneten Strahlstreifens verläuft. Im Fall des gezeigten kreisrunden Laserstrahls 102 werden die Polarisationsrichtungen 104₁-104₇ in den einzelnen Strahlstreifen 103₁-103₇ so gewählt, dass sie an der Schneidfrontvorderkontur auf die Strahlmittelpunktsachse S zeigen. In den einzelnen Strahlstreifen 103₁-103₇ wird die Polarisationsrichtung also so gewählt, dass die E-Vektoren 104₁-104₇ des einfallenden Laserstrahls 102 über die gesamte Werkstückdicke nahezu parallel zur jeweiligen Einfallsebene schwingen und damit bestmöglich absorbiert werden. Mit anderen Worten wird entlang der Schneidfront 100 lokal eine quasi-radiale Polarisation eingestellt.

Wie in Fign. 10a-10c gezeigt, trifft die Laserstrahlung 102 aufgrund der linear polarisierten Strahlstreifen 103₁-103₇ an der gesamten Schneidfront 100 und in jeder Werkstückebene P-polarisiert auf, was für alle Einfallswinkel eine maximale Fresnel-Absorption und absorbierte Intensität zur Folge hat. Da sich bei der Streifenpolarisation die Wirktiefe über die gesamte Werkstückdicke erstreckt, kommt es zu keinem Kanteneinlauf mehr, und die Laserleistung kann optimal in Vorschub umgesetzt werden. Durch die senkrechten Schnittkanten wird die Schnittqualität verbessert. Außerdem wird durch die reduzierte reflektierte Leistung die Gratbildung und Oberflächenrauheit verringert.

Die Zahl der Strahlstreifen 103₁-103₇ sowie deren Breite können beliebig variiert werden, wobei mindestens zwei Strahlstreifen notwendig sind. Zudem sind die Streifen nicht zwingend parallel ausgebildet, sondern können beispielsweise auch keilförmig sein.

**Fig. 11** zeigt schematisch eine zugehörige Laserschneidvorrichtung **110** mit einem Lasergenerator **111** zum Erzeugen eines Laserstrahls **112** und mit einem Streifenpolarisator **113** zum Erzeugen des Laserstrahls 102 mit seinen linear polarisierten Strahlstreifen 103₁-103₇ aus dem Laserstrahl 112. Der Streifenpolarisator 113 in der beschriebenen Form ist richtungsabhängig, d.h., der Streifenpolarisator ist zur Vorschubrichtung v auszurichten, damit die E-Vektoren 104₁-104₇ parallel zur Einfallsebene schwingen. Bei einem linear polarsierten Laserstrahl 112, der auf den Streifenpolarisator 113 trifft, ist dieser ebenfalls richtungsabhängig zu drehen.

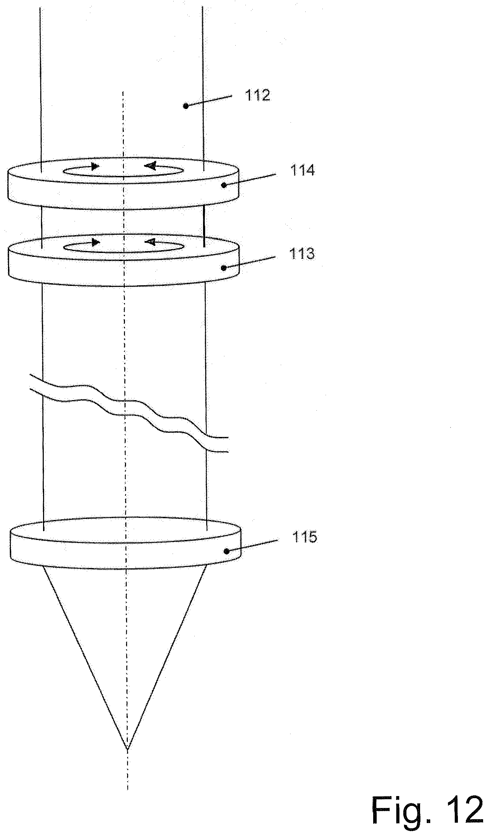

Wie in **Fig. 12** gezeigt, ist dem um die Laserstrahlachse drehbaren Streifenpolarisator 113 ein um die Laserstrahlachse drehbarer Polarisationskonverter **114,** z.B. in Form eines drehbares λ/2-Plättchens, vorgeordnet, um die lineare Polarisationsrichtung des einfallenden Laserstrahls 112 entsprechend zu drehen. Der Drehwinkel beider optischen Komponenten 113, 114 ist nicht zwingend gleich vorzusehen. Dazu können diese entweder unabhängig voneinander gedreht werden oder über eine Kopplung mit definierter Übersetzung miteinander verbunden sein.

Das Prinzip des drehbaren Polarisationskonverters 114 ist nicht auf die Verwendung in Zusammenhang mit einem (ebenfalls drehbaren) Streifenpolarisator 113 beschränkt, sondern ist allgemein auf richtungsabhängige Polarisationsoptiken übertragbar.

Die lineare Polarisation des einfallenden Laserstrahls 112 kann sowohl resonatorintern, also im Lasergenerator 111, als auch über eine Umwandlungsoptik (nicht gezeigt) generiert und über Freistrahlpropagation oder über eine polarisationserhaltende Faser dem Polarisationskonverter 114 oder dem Streifenpolarisator 113 zugeführt werden.

Die beschriebenen optischen Komponenten können sowohl transmissiv als auch reflektiv ausgeführt sein. Zudem ist der Streifenpolarisator 113 nicht zwingend unmittelbar vor der Fokussierung, hier vor einer Fokussierlinse **115,** anzuordnen, sondern kann auch an anderer Stelle der Strahlführung oder im Lasergenerator 111, vorgesehen werden.

## Patentansprüche

1. Verfahren zum Laserschneiden eines Werkstücks (71), wobei mittels eines Laserstrahls (72) zumindest ein Teil des Werkstücks (71) aufgeschmolzen und/oder verdampft wird und sich durch Hinzunahme einer Relativbewegung zwischen Laserstrahl (72) und Werkstück (71) eine Schneidfront (70) am Werkstück (71) ausbildet,
**dadurch gekennzeichnet,**
**dass** der Laserstrahl (72) durch mindestens zwei radial polarisierte Teilstrahlen (72a, 72b) gebildet ist, welche zueinander in Vorschubrichtung (v) des Laserstrahls versetzt sind, oder dass der Laserstrahl (102) durch mehrere sich in Vorschubrichtung (v) des Laserstrahls erstreckende Strahlstreifen (103₁-103₇) mit jeweils unterschiedlicher linearer Polarisationsrichtung (104₁-104₇) gebildet ist, wobei ausgehend von der in Vorschubrichtung (v) verlaufenden Laserstrahllängsmittelebene (105) die zwischen den linearen Polarisationsrichtungen (104₁-104₇) und der Laserstrahllängsmittelebene (105) jeweils gebildeten Winkel (β) zu den äußeren Strahlstreifen hin zunehmen.

2. Verfahren nach Anspruch 1, **dadurch gekennzeichnet, dass** der in Vorschubrichtung (v) des Laserstrahls voreilende Teilstrahl (72a) auf die dem einfallenden Laserstrahl zugewandte Werkstückseite (73) in einem Einstrahlwinkel im Bereich von etwa 70° bis 110°, insbesondere nahezu senkrecht, auftrifft.

3. Verfahren nach Anspruch 1 oder 2, **dadurch gekennzeichnet, dass** der in Vorschubrichtung (v) des Laserstrahls voreilende Teilstrahl (72a) eine höhere Leistungsdichte als der nacheilende Teilstrahl (72b) aufweist.

4. Verfahren nach einem der vorhergehenden Ansprüche, **dadurch gekennzeichnet, dass** der in Vorschubrichtung (v) des Laserstrahls nacheilende Teilstrahl (72b) parallel oder verkippt zum voreilenden Teilstrahl (72a) verläuft.

5. Verfahren nach einem der vorhergehenden Ansprüche, **dadurch gekennzeichnet, dass** der nacheilende Teilstrahl (72b) parallel oder zumindest nahezu parallel zur Schneidfront (70) verläuft.

6. Verfahren nach einem der vorhergehenden Ansprüche, **dadurch gekennzeichnet, dass** die beiden Teilstrahlen (72a, 72b) durch einen einzigen Laserstrahl mit zwei in Vorschubrichtung (v) des Laserstrahls zueinander versetzten Intensitätsmaxima gebildet werden.

7. Verfahren nach Anspruch 1, **dadurch gekennzeichnet, dass** die lineare Polarisationsrichtung (104₁-104₇) der Strahlstreifen (103₁-103₇) jeweils parallel zu einer Normalen der Schneidfrontvorderkontur des jeweiligen Strahlstreifens (103₁-103₇) verläuft.

8. Verfahren nach Anspruch 1 oder 7, **dadurch gekennzeichnet, dass** die linearen Polarisationsrichtungen (104₁-104₇) der Strahlstreifen (103₁-103₇) entsprechend der jeweiligen Vorschubrichtung (v) mitgedreht werden.

9. Verfahren nach einem der vorhergehenden Ansprüche, **dadurch gekennzeichnet, dass** der Laserstrahl (1) eine Wellenlänge im Bereich von ca. 500 nm bis ca. 5 µm, insbesondere im Bereich von ca. 1 µm, aufweist.

10. Verfahren nach einem der vorhergehenden Ansprüche, **dadurch gekennzeichnet, dass** der Laserstrahl (1) ein räumliches Strahlprofil (40) mit Intensitätsmaxima (41) im Bereich des äußeren Radius und mit abnehmender Intensität zur Mitte (42) des Strahlprofils (40), insbesondere einen Ringmode, aufweist und dass das Strahlprofil (40) derart eingestellt wird, dass sich ein Intensitätsmaximum (41) mit der Bestrahlfrontkante (3a) an der dem einfallenden Laserstrahl (1) zugewandten Werkstückseite (2a) deckt und sich das Intensitätsminimum (42) mit der Bestrahlfrontkante (3b) an der dem einfallenden Laserstrahl (1) abgewandten Werkstückseite (2b) deckt.

11. Verfahren nach Anspruch 10, **dadurch gekennzeichnet, dass** das Strahlprofil (40) einer Flat-Top-Intensitätsverteilung entspricht, die im Zentrum ein lokales Minimum vorzugsweise in Form eines invertierten Gauss-Profils aufweist.

12. Vorrichtung (90; 110) zum Laserschneiden eines Werkstücks (71; 101), mit einem Lasergenerator (91; 101) zum Erzeugen eines Laserstrahls (72; 112), **gekennzeichnet durch** : eine Einrichtung (92; 113) zum Erzeugen von mindestens zwei radial polarisierten Teilstrahlen (72a, 72b) oder eines **durch** mehrere Strahlstreifen (103₁-103₇) mit jeweils unterschiedlicher linearer Polarisationsrichtung (104₁-104₇) gebildeten, streifenpolarisierten Laserstrahls (102) aus dem Laserstrahl (72; 112), und Mittel zum Bewegen der beiden radial polarisierten Teilstrahlen (72a, 72b) bzw. des streifenpolarisierten Laserstrahls (102) relativ zum Werkstück (71; 101) in einer Vorschubrichtung (v),
wobei die beiden radial polarisierten Teilstrahlen (72a, 72b) zueinander in Vorschubrichtung (v) versetzt sind und wobei die mehreren Strahlstreifen (103₁-103₇) des streifenpolarisierten Laserstrahls (102) sich in Vorschubrichtung (v) des Laserstrahls erstrecken und ausgehend von der in Vorschubrichtung (v) verlaufenden Laserstrahllängsmittelebene (105) die zwischen den linearen Polarisationsrichtungen (104₁-104₇) und der Laserstrahllängsmittelebene (105) jeweils gebildeten Winkel (ß) zu den äußeren Strahlstreifen hin zunehmen.

13. Vorrichtung nach Anspruch 12, **dadurch gekennzeichnet, dass** die Einrichtung zum Erzeugen des streifenpolarisierten Laserstrahls (102) als ein um die Laserstrahlachse drehbar gelagerter Streifenpolarisator (113) ausgebildet ist und dem Streifenpolarisator (113) ein um die Laserstrahlachse drehbar gelagerter Polarisationskonverter (114) vorgeordnet ist, der die lineare Polarisationsrichtung des auf den Streifenpolarisator (113) auftreffenden Laserstrahls (112) entsprechend dreht.

## Claims

1. Method for laser cutting a workpiece (71), at least a portion of the workpiece (71) being melted and/or vaporised by means of a laser beam (72) and a cutting front (70) being formed on the workpiece (71) by the addition of a relative movement between the laser beam (72) and the workpiece (71),
**characterised in that**
the laser beam (72) is formed by at least two radially polarised part-beams (72a, 72b) which are offset relative to each other in the advance direction (v) of the laser beam, or **in that** the laser beam (102) is formed by a plurality of beam strips (103₁-103₇) which extend in the advance direction (v) of the laser beam, each having different linear polarisation directions (104₁-104₇), with, starting from the laser beam longitudinal centre plane (105) which extends in the advance direction (v), the angles (ß) which are formed in each case between the linear polarisation directions (104₁-104₇) and the laser beam longitudinal centre plane (105) increasing towards the outer beam strips.

2. Method according to claim 1, **characterised in that** the part-beam (72a) leading in the advance direction (v) of the laser beam strikes the workpiece side (73) facing the incident laser beam at an angle of incidence in the range from approximately 70° to 110°, in particular almost perpendicularly.

3. Method according to claim 1 or 2, **characterised in that** the part-beam (72a) leading in the advance direction (v) of the laser beam has a higher power density than the trailing part-beam (72b).

4. Method according to any one of the preceding claims, **characterised in that** the part-beam (72b) trailing in the advance direction (v) of the laser beam extends in a parallel or tilted manner with respect to the leading part-beam (72a).

5. Method according to any one of the preceding claims, **characterised in that** the trailing part-beam (72b) extends parallel or at least almost parallel with the cutting front (70).

6. Method according to any one of the preceding claims, **characterised in that** the two part-beams (72a, 72b) are formed by a single laser beam with two intensity maxima which are offset with respect to each other in the advance direction (v) of the laser beam.

7. Method according to claim 1, **characterised in that** the linear polarisation direction (104₁-104₇) of the beam strips (103₁-103₇) extends parallel with a normal of the cutting-front front contour of the beam strip (103₁-103₇), respectively.

8. Method according to claim 1 or 7, **characterised in that** the linear polarisation directions (104₁-104₇) of the beam strips (103₁-103₇) are rotated in accordance with the respective advance direction (v).

9. Method according to any one of the preceding claims, **characterised in that** the laser beam (1) has a wavelength in the range from approximately 500 nm to approximately 5 µm, in particular in the range of approximately 1 µm.

10. Method according to any one of the preceding claims, **characterised in that** the laser beam (1) has a spatial beam profile (40) with intensity maxima (41) in the range of the outer radius and with decreasing intensity towards the centre (42) of the beam profile (40), in particular a ring mode, and that the beam profile (40) is adjusted in such a manner that an intensity maximum (41) coincides with the irradiation front edge (3a) at the workpiece side (2a) facing the incident laser beam (1) and the intensity minimum (42) coincides with the irradiation front edge (3b) at the workpiece side (2b) facing away from the incident laser beam (1).

11. Method according to claim 10, **characterised in that** the beam profile (40) corresponds to a flat-top intensity distribution which at the centre has a local minimum, preferably in the form of an inverted Gaussian profile.

12. Device (90; 110) for laser cutting a workpiece (71; 101), comprising a laser generator (91; 101) for generating a laser beam (72; 112), **characterised by**:
a device (92; 113) for generating from the laser beam (72; 112) at least two radially polarised part-beams (72a, 72b) or a strip-polarised laser beam (102) which is formed by a plurality of beam strips (103₁-103₇), each having different linear polarization directions (104₁-104₇), and
means for moving the two radially polarized part-beams (72a, 72b) or the strip-polarized laser beam (102) relative to the workpiece (71; 101) in an advance direction (v),
wherein the two radially polarized part-beams (72a, 72b) are offset relative to each other in the advance direction (v) and wherein the plurality of beam strips (103₁-103₇) of the strip-polarized laser beam (102) extend in the advance direction (v) of the laser beam and, starting from the laser beam longitudinal centre plane (105) which extends in the advance direction (v),
the angles (β) which are formed in each case between the linear polarization directions (104₁-104₇) and the laser beam longitudinal centre plane (105) increasing towards the outer beam strips.

13. Device according to claim 12, **characterised in that** the device for generating the strip-polarized laser beam (102) is designed as a strip polariser (113) which is supported so as to be able to be rotated about the laser beam axis and there is arranged upstream of the strip polariser (113) a polarisation converter (114) which is supported in a rotatable manner about the laser beam axis and which accordingly rotates the linear polarisation direction of the laser beam (112) which strikes the strip polariser (113).

## Revendications

1. Procédé de coupe au laser d'une pièce (71), selon lequel au moins une partie de la pièce (71) est fondue et/ou vaporisée au moyen d'un faisceau laser (72) et un front de coupe (70) se forme sur la pièce (71) par addition d'un mouvement relatif entre le faisceau laser (72) et la pièce (71),
**caractérisé en ce**
**que** le faisceau laser (72) est formé d'au moins deux faisceaux partiels (72a, 72b) polarisés radialement qui sont décalés l'un par rapport à l'autre dans la direction d'avance (v) du faisceau laser, ou que le faisceau laser (102) est formé de plusieurs bandes de faisceau (103₁-103₇) s'étendant dans la direction d'avance (v) du faisceau laser, ayant chacune une direction de polarisation linéaire (104₁-104₇) différente, les angles (β) formés chaque fois entre les directions de polarisation linéaire (104₁-104₇) et le plan médian longitudinal du faisceau laser (105) augmentant dans la direction des bandes de faisceau extérieures à partir du plan médian longitudinal du faisceau laser (105) s'étendant dans la direction d'avance (v).

2. Procédé selon la revendication 1, **caractérisé en ce que** le faisceau partiel (72a) situé en avant dans la direction d'avance (v) du faisceau laser atteint le côté (73) de la pièce tourné vers le faisceau laser incident selon un angle d'incidence environ compris entre 70° et 110°, en particulier à peu près perpendiculairement.

3. Procédé selon la revendication 1 ou 2, **caractérisé en ce que** le faisceau partiel (72a) situé en avant dans la direction d'avance (v) du faisceau laser présente une densité de puissance plus élevée que le faisceau partiel (72b) situé en arrière.

4. Procédé selon l'une des revendications précédente, **caractérisé en ce que** le faisceau partiel (72b) situé en arrière dans la direction d'avance (v) du faisceau laser s'étend parallèlement ou est incliné par rapport au faisceau partiel (72a) situé en avant.

5. Procédé selon l'une des revendications précédente, **caractérisé en ce que** le faisceau partiel (72b) situé en arrière s'étend parallèlement ou au moins à peu près parallèlement au front de coupe (70).

6. Procédé selon l'une des revendications précédente, **caractérisé en ce que** les deux faisceaux partiels (72a, 72b) sont formés par un seul faisceau laser présentant deux maxima d'intensité décalés l'un par rapport à l'autre dans la direction d'avance (v) du faisceau laser.

7. Procédé selon la revendication 1, **caractérisé en ce que** la direction de polarisation linéaire (104₁-104₇) des bandes de faisceau (103₁-103₇) s'étend chaque fois parallèlement à une normale au contour avant du front de coupe de la bande de faisceau (103₁-103₇) respective.

8. Procédé selon la revendication 1 ou 7, **caractérisé en ce que** les directions de polarisation linéaire (104₁-104₇) des bandes de faisceau (103₁-103₇) sont tournées de manière correspondante à la direction d'avance (v) respective.

9. Procédé selon l'une des revendications précédente, **caractérisé en ce que** le faisceau laser (1) présente une longueur d'onde se situant dans la plage d'environ 500 nm à environ 5 µm, en particulier de l'ordre d'environ 1 µm.

10. Procédé selon l'une des revendications précédente, **caractérisé en ce que** le faisceau laser (1) présente un profil spatial de faisceau (40) avec des maxima d'intensité (41) dans la zone du rayon extérieur et avec une intensité décroissante vers le milieu (42) du profil de faisceau (40), en particulier un mode annulaire, et que le profil de faisceau (40) est réglé de telle sorte qu'un maximum d'intensité (41) coïncide avec le bord de front d'exposition au rayonnement (3a) du côté (2a) de la pièce tourné vers le faisceau laser incident (1) et que le minimum d'intensité (42) coïncide avec le bord de front d'exposition au rayonnement (3b) du côté (2b) de la pièce opposé au faisceau laser incident (1).

11. Procédé selon la revendication 10, **caractérisé en ce que** le profil de faisceau (40) correspond à une répartition d'intensité du type « flat top », qui présente au centre un minimum local, de préférence sous la forme d'un profil gaussien inversé.

12. Dispositif (90 ; 110) pour la coupe au laser d'une pièce (71 ; 101), comprenant un générateur laser (91 ; 101) pour générer un faisceau laser (72 ; 112),
**caractérisé par**
un dispositif (92 ; 113) pour générer au moins deux faisceaux partiels (72a, 72b) polarisés radialement ou un faisceau laser (102) polarisé en bandes, formé de plusieurs bandes de faisceau (103₁-103₇) ayant chacune une direction de polarisation linéaire (104₁-104₇) différente, à partir du faisceau laser (72 ; 112) et des moyens pour déplacer les deux faisceaux partiels (72a, 72b) polarisés radialement ou le faisceau laser (102) polarisé en bandes par rapport à la pièce (71 ; 101) dans une direction d'avance (v),
les deux faisceaux partiels (72a, 72b) polarisés radialement étant décalés l'un par rapport à l'autre dans la direction d'avance (v) et les plusieurs bandes de faisceau (103₁-103₇) du faisceau laser (102) polarisé en bandes s'étendant dans la direction d'avance (v) du faisceau laser et les angles (β) formés chaque fois entre les directions de polarisation linéaire (104₁-104₇) et le plan médian longitudinal du faisceau laser (105) augmentant dans la direction des bandes de faisceau extérieures à partir du plan médian longitudinal du faisceau laser (105) s'étendant dans la direction d'avance (v).

13. Dispositif selon la revendication 12, **caractérisé en ce que** le dispositif pour générer le faisceau laser (102) polarisé en bandes est réalisé sous la forme d'un polariseur à bandes (113) monté tournant autour de l'axe du faisceau laser et qu'en amont du polariseur à bandes (113) est disposé un convertisseur de polarisation (114) monté tournant autour de l'axe du faisceau laser, qui tourne de manière correspondante la direction de polarisation linéaire du faisceau laser (112) qui arrive sur le polariseur à bandes (113).
